Europäisches Patentamt

European Patent Office

Office européen des brevets

(11) Veröffentlichungsnummer: **0 097 893**
**A2**

(12) **EUROPÄISCHE PATENTANMELDUNG**

(21) Anmeldenummer: 83105961.3

(22) Anmeldetag: 18.06.83

(51) Int. Cl.³: **C 08 G 61/12**
**H 01 B 1/12**

(30) Priorität: 29.06.82 DE 3224157
29.06.82 DE 3224158

(43) Veröffentlichungstag der Anmeldung:
11.01.84 Patentblatt 84/2

(84) Benannte Vertragsstaaten:
CH DE FR GB IT LI NL

(71) Anmelder: BAYER AG
Zentralbereich Patente, Marken und Lizenzen
D-5090 Leverkusen 1, Bayerwerk(DE)

(72) Erfinder: Kossmehl, Gerhard, Prof. Dr.
Grabenstrasse 38f
D-1000 Berlin 45(DE)

(72) Erfinder: Hocker, Jürgen, Dr.
Eichenweg 6
D-5060 Bergisch-Gladbach 2(DE)

(54) Oxidierende Polymerisation mit NO+ oder NO2+.

(57) Verfahren zur Herstellung dotierter, heteroaromatische 5-Ringe enthaltende Polymerer, in dem man Polymere, die mehrfach aromatische 5-Ring-Heterocyclen in der Polymerkette enthalten oder niedermolekulare 5-Ring-heterocyclische Verbindungen, gegebenenfalls in inerten organischen Lösungsmitteln, bei Temperaturen von −20°C bis +80°C bzw. bis zum Siedepunkt des Lösungsmittels mit Nitronium- oder Nitrosoniumsalzen umsetzt, und die nach diesem Verfahren erhaltenen dotierten, heteroaromatischen 5-Ringe enthaltenden Polymeren.

EP 0 097 893 A2

Croydon Printing Company Ltd.

BAYER AKTIENGESELLSCHAFT          5090 Leverkusen,Bayerwerk

Zentralbereich                    G/Rz
Patente, Marken und Lizenzen

**0097893**

Oxidierende Polymerisation mit $NO^{\oplus}$ oder $NO_2^{\oplus}$

Man hat bereits Polyacetylen mit Nitronium- bzw. Nitrosonium-Salzen dotiert und gut leitfähige Polymere erhalten. Verwendet wurden u.a. $NO_2^{\oplus}SbF_6^{\ominus}$, $NO^{\oplus}SbCl_6^{\ominus}$ und $NO_2^{\oplus}BF_4^{\ominus}$ (S.C. Gau, J.A. Milliken, A. Pron, A.G. MacDiarmid, A.J. Heeger, Chem. Comm. 1979, 662; A.G. MacDiarmid, A.J. Heeger, Synthetic Metals 1 (1980) 101).

DE-OS 29 29 366 beschreibt die Dotierung von Poly(p-phenylen) mit u.a. $NO^{\oplus}SbF_6^{\ominus}$, $NO_2^{\oplus}SbF_6^{\ominus}$, $NO^{\oplus}AsF_6^{\ominus}$, $NO^{\oplus}PF_6^{\ominus}$, $NO_2^{\oplus}PF_6^{\ominus}$, $NO^{\oplus}BF_4^{\ominus}$, $NO_2^{\oplus}BF_4^{\ominus}$ und $NO^{\oplus}ClO_4^{\ominus}$. Mit 0,5 bis 5 Gew.-% entstehen elektrisch gut leitfähige Polymere.

Außerdem ist bekannt, Polyaromaten wie Tetraphenyl oder Perylen mit $NO^{\oplus}SbF_6^{\ominus}$ in Substanzen mit hoher elektrischer Leitfähigkeit umzuwandeln (DE-OS 30 05 299).

DE-OS 30 00 379 bzw. EP 35.713 und EP 39.829 beschreiben die Dotierung von Polyaromaten bzw. von Heteropolyphenylenen mit Nitrosonium- und Nitroniumsalzen.

Gegenstand der Erfindung ist somit ein Verfahren zur Herstellung dotierter heterocyclischer Polymerer, das dadurch gekennzeichnet ist, daß man Polymere, die mehrfach aromatische 5-Ring-Heterocyclen in der Polymerkette enthalten

Le A 21 811 - EUROPA

BAD ORIGINAL

oder niedermolekulare 5-gliedrige heteroaromatische Verbindungen mit Nitronium- oder Nitrosoniumsalzen umsetzt, sowie die nach diesem Verfahren erhaltenen Polymeren.

Geeignete Polymere sind solche, die Furan-, Pyrrol-, Pyrazol-, Imidizol-, Thiazol-, Thiophen- oder Oxazol-Einheiten mehrfach in der Polymerkette enthalten.

Besonders bevorzugt sind Polymere, die den Thiophendiyl-Rest mehrfach in der Kette enthalten.

Für eine Behandlung geeignetes Schwefel enthaltendes Polymer sind z.B. Poly(2,5-thiophendiyl), Poly(2,5-thiophendiyl)sulfid, Poly(2,5-thiophendivinylen) und Poly(2,5-thiophendiylvinylen-p-phenylen-vinylen).

Geeignete Nitronium- bzw. Nitrosoniumsalze sind z.B. $NO^{\oplus}SbF_6^{\ominus}$; $NO_2^{\oplus}SbF_6^{\ominus}$; $NO^{\oplus}AsF_6^{\ominus}$; $NO^{\oplus}PF_6^{\ominus}$; $NO_2^{\oplus}PF_6^{\ominus}$; $NO^{\oplus}BF_4^{\ominus}$ und $NO^{\oplus}ClO_4^{\ominus}$.

Die Polymeren können bei Temperaturen von $-20^{\circ}C$ bis $+80^{\circ}C$ in inerten organischen Lösungsmitteln mit den Nitronium- bzw. Nitrosoniumsalzen behandelt werden. Die Polymeren sind dabei häufig nicht gelöst, sondern nur suspendiert, die Salze liegen als Lösung vor. Im allgemeinen verwendet man von Nitronium- bzw. Nitrosoniumsalze eine Menge entsprechend 10 - 100 Gew.-% der zu behandelnden Polymeren. Man läßt diese Lösung einige Zeit, bis zu 20 Stunden, auf das Polymer einwirken. Dabei verfärbt es sich in Richtung auf schwarz und seine elektrische Leitfähigkeit wird erheblich verbessert.

Le A 21 811

Werden nun erfindungsgemäß niedermolekulare 5-Ring-Heteroaromaten (auch solche mit zwei oder mehreren heteroaromatischen Ringsystemen, die auch Teil eines konjugierten $\Pi$-Elektronensystems sein können) mit Nitronium- oder Nitrosoniumsalzen umgesetzt, so entstehen nicht die zu erwartenden niedermolekularen Salze. Es werden vielmehr durch kombinierte oxidative Polymerisation und Dotierung Polymere mit Salzstruktur erhalten. So wird z.B. aus Thiophen oder 2,2'-Bithienyl ein Polymer mit Salzstruktur erhalten, das mit dotiertem Poly(2,5-thiophendiyl) praktisch identisch ist.

Geeignete 5-Ring-Heterocyclen sind z.B. Thiophen, Pyrrol, Furan, Pyrazol, Imidazol, Thiazol, Oxazol, die durch Halogen, Alkyl, Carbalkoxy, Carbonyl, Hydroxy substituiert sein können, verknüpften Heterocyclen wie Tetrathiafulvalen, Di-2- oder -3-Thienylsulfid, Di-2-thienylmethan, sowie Verbindungen, bei denen aromatische, substituiert aromatische bzw. heteroaromatische Ringsysteme mit 5-Ring-Heterocyclen kondensiert sind. In allen Fällen entstehen dotierte Polymere, die gute elektrische Leitfähigkeit aufweisen.

Bei diesen Umsetzungen können Nitronium- bzw. Nitrosoniumsalze wie z.B. $NO^{\oplus}BF_4^{\ominus}$, $NO_2^{\oplus}BF_4^{\ominus}$, $NO^{\oplus}PF_6^{\ominus}$, $NO^{\oplus}AsF_6^{\ominus}$, $NO^{\oplus}SbF_6^{\ominus}$, $NO_2^{\oplus}SbF_6^{\ominus}$ sowohl in unpolaren als auch polaren, absolut wasserfreien Lösungsmitteln wie z.B. Hexan, Benzol, Toluol, Dichlormethan, 1,2-Dichlorethan, Acetonitril, Nitromethan oder deren Mischungen sowohl unter Luft, Stickstoff oder Argon bei Temperaturen zwischen -20$^{\circ}$C bis zur Siedetemperatur des jeweiligen Lösungsmittels eingesetzt werden.

Le A 21 811

Einige dieser polyheteroaromatischen Verbindungen sind gegen Luftfeuchtigkeit und zum Teil auch gegen Hydrolyse recht stabil. So läßt sich z.B. das aus Thiophen mit $NO^{\oplus}SbF_6^{\ominus}$ erhaltene Polymer (Tabelle 1, Nr. 7) durch einfachers Rühren mit Wasser bei Raumtemperatur nicht zu Poly(2,5-thiophendiyl) hydrolysieren (Tabelle 1, Nr. 8). Andere Polymere werden durch mehrstündiges Rühren mit Wasser, Ethanol bzw. 25%igem $NH_4OH$ bei Raumtemperatur teilweise bis vollständig zu den entsprechenden Polyheteroarylenen hydrolysiert. Bei der Hydrolyse mit $NH_4OH$ tritt auch Aminierung ein (siehe z.B. Beispiel 6).

Die Struktur der erhaltenen Polymere ist durch Elementaranalysen, IR-Spektren sowie massenspektrometrische Untersuchungen bestätigt.

Die IR-Spektren dieser Polymere mit Salzstruktur weisen außer den für die eingesetzten Grundkörper bzw. Polymere charakteristischen Banden für die heteroaromatischen Baueinheiten die charakteristischen Banden für $BF_4^{\ominus}$ (1120, 1080, 1030 cm$^{-1}$, sehr stark; 530, 520 cm$^{-1}$, mittelstark), $PF_6^{\ominus}$ (1120, 1080 cm$^{-1}$, sehr stark); bzw. $SbF_6^{\ominus}$ (1010 cm$^{-1}$, sehr stark; 470, 450 cm$^{-1}$, mittelstark) auf (H. Siebert, Anwendungen der Schwingungsspektroskopie in der anorganischen Chemie, Springer, Berlin 1966; F.Nakamoto, Infrered Spectra of Inorganic and Coordination ·Compounds, 2nd ed., Wiley Interscience, New York 1970).

Massenspektrometrische Untersuchungen (Temperatur bis 450°C, Energie 4 kV) ergaben für das aus 2,2'-Bithienyl mit $NO^{\oplus}PF_6^{\ominus}$ erhaltene Polymer (Tabelle 1, Nr. 20), daß der verdampfbare Anteil dieses Polymers Oligomere mit bis zu 16 Thiophensystemen (Molmasse: 1314) enthält.

Besonders dieses Ergebnis der massenspektrometrischen Untersuchung beweist, daß bei der Umsetzung von nieder-

Le A 21 811

molekularen Verbindungen der weiter oben genannten Strukturen mit Nitronium- bzw. Nitrosoniumsalzen eine oxidative (bzw. dehydrierende) Polymerisation zu den Polymeren mit Salzstruktur stattfindet. Der Mechanismus dieser Polymerisation dürfte analog dem für die Kovacic-Polymerisation von aromatischen und heteroaromatischen Kohlenwasserstoffen (M.B. Jones, P. Kovacic, D. Lanska, J. Polymer Sci., Polymer Chem. Ed. 19 (1981) 89; M.B. Jones, P. Kovacic, R.F.Howe, Polymer Preprints 21,2 (1980) 259; G.G. Engstrom, P. Kovacic, J. Polymer Sci., Polymer Chem. Ed. 15 (1977) 2453), sowie dem von G. Koßmehl und G. Chatzitheodorou (Makromol. Chem., Rapid Comm. 2 (1981) 551) angegebenen Mechanismus für die oxidative (bzw. dehydrierende) Polymerisation von Thiophen und 2,2'-Bithienyl mit $AsF_5$ verlaufen.

Die experimentellen Angaben zur Synthese der Polymere sowie zur Hydrolyse derselben sind in den Beispielen 1 bis 7 sowie den betreffenden Angaben in Tabelle 1 zu entnehmen.

Tabelle 1 enthält auch die Werte der elektrischen Leitfähigkeiten ($\sigma_{298K}$, $\sigma_o$, $E_A$, berechnet nach $\sigma = \sigma_o \cdot \exp (-E_A/2KT)$ für eine größere Anzahl von hergestellten Polymeren und ihren Hydrolyseprodukten. Unter unseren Standardbedingungen bei einem Druck von 1500 $kp \cdot cm^{-2}$ gemessen (siehe z.B. G. Koßmehl, G. Chatzitheodorou, Makromol. Chem., Rapid Comm. 2 (1981) 551), ergeben sich $\sigma$-Werte bis zu 0,07 $mho \cdot cm^{-1}$ bei $E_A = 0,04 eV$ (Tabelle 1, Nr. 17).

Die erfindungsgemäßen Polymeren können als elektrisch leitende oder halbleitende Bauelemente z.B. in Flächenheizleitern, in elektronischen Devices, als Batterieelemente, für Kondensatoren, für photovoltaische Wandler sowie zur Abschirmung elektromagnetischer Strahlung angewendet werden.

Le A 21 811

- 6 -

## BEISPIELE

### Beispiel 1 (Tabelle 1, Nr. 3)

0,84 g (10 mmol) Thiophen werden in 15 ml abs. Acetonitril gelöst. In diese Lösung wird unter $N_2$ bei Eiskühlung die Lösung von 2,66 g (10 mmol)$NOSbF_6$ in 300 ml abs. Acetonitril eingetropft. Nach dem Auftauen des Eisbades wird weiter gerührt. 20 Stunden später wird der schwarze Niederschlag abgesaugt, mit Acetonitril gut gewaschen und im Vakuum über $P_2O_5$ und NaOH bei Zimmertemperatur getrocknet.

Ausbeute: 2,51 g (28 % d. Th., berechnet als 1:3,5-Komplex).

$(C_{40}H_{20}S_{10}Sb_{35}F_{210})_m$  Ber.  C 5,30  H 0,22  S 3,53

Gef.  C 5,24  H 1,61  S 3,79

Werden 10 mmol Thiophen mit 35 mmol $NOBF_4$ umgesetzt, so beträgt die Ausbeute 98 %.

### Beispiel 2 (Tabelle 1, Nr. 9)

0,84 g (10 mmol) Thiophen werden in 50 ml abs. 1,2-Dichlorethan gelöst. Unter $N_2$ und Eiskühlung wird diese Lösung mit 1,75 g (10 mmol) $NOPF_6$ in 600 ml 1,2-Dichlorethan versetzt. Das schwarze Produkt wird wie in Beispiel 1 aufgearbeitet.

Ausbeute: 1,59 g (97 % d.Th., berechnet als 1:0,55-Komplex).

$(C_{400}H_{200}S_{100}P_{55}F_{330})_m$ Ber.  C 29,68  H 1,25  S 19,81

Gef.  C 29,97  H 1,71  S 19,52

Le A 21 811

Beispiel 3 (Tabelle 1, Nr. 17)

1,66 g (10 mmol) 2,2'-Bithienyl werden in 75 ml abs. 1,2-Dichlorethan gelöst. Unter Ar und Eiskühlung wird mit 1,17 g (10 mmol) $NOBF_4$ in 700 ml $C_2H_4Cl_2$ versetzt. Der schwarze Niederschlag wird wie in Beispiel 1 aufgearbeitet.

Ausbeute: 1,77 g (55 % d. Th., berechnet als 1:1,8-Komplex).

$(C_{80}H_{40}S_{20}B_{18}F_{72})_m$  Ber. C 29,98  H 1,26  S 20,01
Gef. C 29,82  H 2,09  S 20,55

Bei der Umsetzung von 10 mmol 2,2'-Bithienyl mit 18 mmol $NOBF_4$ beträgt die Ausbeute 99 %.

Beispiel 4 (Tabelle 1, Nr. 22)

0,67 g (10 mmol) Pyrrol werden in 15 ml abs. 1,2-Dichlorethan gelöst. Unter Ar und Eiskühlung wird mit 1,17 g (10 mmol) $NOBF_4$ in 250 ml $C_2H_4Cl_2$ versetzt. Der schwarze Niederschlag wird wie in Beispiel 1 aufgearbeitet.

Ausbeute: 1,47 g (90 % d.Th., berechnet als 1:1,1-Komplex).

$C_{40}H_{30}N_{10}B_{11}F_{44})_m$  Ber. C 29,92  H 1,88  N 8,72
Gef. C 29,65  H 3,30  N 10,06

Mit 10 mmol Pyrrol und 11 mmol $NOBF_4$ steigt die Ausbeute auf 99 %.

Beispiel 5 (Tabelle 1, Nr. 27)

0,68 g (10 mmol) Furan werden in 15 ml abs. Dichlorethan gelöst. Unter Ar und Eiskühlung wird mit 2,66 g (10 mmol) $NOSbF_6$ in 300 ml $C_2H_4Cl_2$ versetzt. Der schwarze Niederschlag wird wie in Beispiel 1 aufgearbeitet.

Ausbeute: 2,82 g (71 % d.Th., berechnet als 1:1,4-Komplex).

Le A 21 811

$(C_{40}H_{20}O_{10}Sb_{14}F_{84})_m$   Ber.   C 12,13   H 0,51
Gef.   C 12,28   H 2,26

Mit 10 mmol Furan und 14 mmol $NOSbF_6$ steigt die Ausbeute auf 99 %.

Beispiel 6 (Tabelle 1, Nr. 36)

1,92 g (10 mmol) trans-1,2-Di(2-thienyl)ethylen werden in 15 ml abs. Acetonitril gelöst. Unter $N_2$ und Eiskühlung wird mit 1,17 g (10 mmol) $NOBF_4$ in 40 ml $CH_3CN$ versetzt. Der schwarze Niederschlag wird wie in Beispiel 1 aufgearbeitet.

Ausbeute: 1,99 g (97 % d. Th., berechnet als 1:0,15-Komplex).

$(C_{1000}H_{600}S_{200}B_{15}F_{60})_m$   Ber.   C 59,08   H 2,97   S 31,54
Gef.   C 58,91   H 3,41   S 31,25

Beispiel 7 (Tabelle 1, Nr. 11/12)

Bei der Reaktion von 1,66 g (10 mmol) 2,2'-Bithienyl mit 1,17 g (10 mmol) $NO^{\oplus}BF_4^{\ominus}$ in 600 ml Hexan wird, wie in Beispiel 1 beschrieben, ein schwarzes Produkt erhalten.

Ausbeute: 2,27 g (99 % d.Th., berechnet als 1:0,73-Komplex).

$(C_{800}H_{400}S_{200}B_{73}F_{292})_m$   Ber.   C 42,22   H 1,77   S 28,17
Gef.   C 42,10   H 2,07   S 28,51

Das erhaltene schwarze Produkt wird mit 25%ig. $NH_4OH$ bei Raumtemperatur 1 Stunde gerührt. Das dunkelbraune bis schwarze Polymer wird mit Wasser neutral gewaschen und im Vakuum über $P_2O_5$ und NaOH bei Raumtemperatur getrocknet.

$(C_4H_2S)_n$   Ber.   C 58,50   H 2,45   S 39,04
Gef.   C 52,02   H 2,56   S 39,22   N 2,92

Le A 21 811

Beispiel 8 (siehe Tabelle 1, Nr. 41)

0,82 g (10 mmol) Poly(2,5-thiophendiyl) werden in 60 ml abs. Dichlormethan gegeben. In diese Aufschlämmung wird unter $N_2$ und Eiskühlung eine Lösung von 2,66 g(10 mmol) $NOSbF_6$ in 250 ml $CH_2Cl_2$ eingetropft. Das dunkelbraune Polymer färbt sich schwarz. Nach dem Auftauen des Eises erwärmt sich die Lösung auf Zimmertemperatur. 20 Stunden nach der Zugabe von $NOSbF_6$ wird das schwarze Polymer abgesaugt, mit $CH_2Cl_2$ gut gewaschen und im Vakuum über $P_2O_5$ und NaOH bei Zimmertempertur getrocknet.

Ausbeute: 2,18 g (98 % d.Th., berechnet als 1/0,6-Komplex).

$(C_{40}H_{20}S_{10}Sb_6F_{36})_m$    Ber. C 21,49   H 0,90   S 14,34

                          Gef. C 21,78   H 1,70   S 14,40

Die spezifische Leitfähigkeit beträgt $9,1 \times 10^{-5}\Omega^{-1}cm^{-1}$, die Aktivierungsenergie 0,07 eV.

Le A 21 811

Tabelle 1 — Herstellung der Polymeren mit Salzstruktur und Werte ihrer elektrischen Leitfähigkeit

| Nr. | Ausgangsprodukt | umgesetzt mit | in | unter | Ausbeute | $\sigma_{298\ K}$ $\overline{mho \cdot cm^{-1}}$ | $\sigma_o$ $\overline{mho \cdot cm^{-1}}$ | $E_A$ $\overline{eV}$ |
|---|---|---|---|---|---|---|---|---|
| 1 | Thiophen | $NO^{\oplus}BF_4^{\ominus}$ | $C_6H_6$ | $N_2$ | 40 % | $3,6 \cdot 10^{-9}$ | $3,5 \cdot 10^{-1}$ | 1,18 |
| 2 | Thiophen | $NO^{\oplus}BF_4^{\ominus}$ | $CH_3-CN$ | Luft | 50 % | $7,9 \cdot 10^{-7}$ | $1,2 \cdot 10^{-4}$ | 0,26 |
| 3 | Thiophen | $NO^{\oplus}SbF_6^{\ominus}$ | $CH_3-CN$ | $N_2$ | 98 % | $4,0 \cdot 10^{-5}$ | $1,1 \cdot 10^{-3}$ | 0,17 |
| 4 | Thiophen | $NO^{\oplus}BF_4^{\ominus}$ | $CH_2Cl-CH_2Cl$ | $N_2$ | quant. | $1,5 \cdot 10^{-4}$ | $1,4 \cdot 10^{-3}$ | 0,11 |
| 5 | Thiophen | $NO^{\oplus}BF_4^{\ominus}$ | $CH_2Cl-CH_2Cl$ | Ar | quant. | $2,4 \cdot 10^{-4}$ | $1,5 \cdot 10^{-2}$ | 0,21 |
| 6 | | aus 5 + $NH_4OH$ [b] | | | | $9,2 \cdot 10^{-12}$ | $2,4 \cdot 10^{-5}$ | 0,85 |
| 7 | Thiophen | $NO^{\oplus}SbF_6^{\ominus}$ | $CH_2Cl_2$ | Ar | quant. | $3.0 \cdot 10^{-5}$ | $2,1 \cdot 10^{-3}$ | 0,22 |
| 8 | | aus 7 + $H_2O$ [a] | | | | $1,3 \cdot 10^{-5}$ | $4,3 \cdot 10^{-3}$ | 0,30 |
| 9 | Thiophen | $NO^{\oplus}PF_6^{\ominus}$ | $CH_2Cl-CH_2-Cl$ | $N_2$ | quant. | $1,7 \cdot 10^{-5}$ | $1,1 \cdot 10^{-3}$ | 0,21 |
| 10 | | aus 9 + $C_2H_5OH$ [c] | | | | $8,3 \cdot 10^{-7}$ | $3,3 \cdot 10^{-2}$ | 0,54 |
| 11 | 2,2'-Bithienyl | $NO^{\oplus}BF_4^{\ominus}$ | $C_6H_{14}$ | $N_2$ | quant. | $7,0 \cdot 10^{-3}$ | $4,1 \cdot 10^{-1}$ | 0,21 |
| 12 | | aus 11 + $NH_4OH$ [b] | | | | $2,5 \cdot 10^{-10}$ | $3,8 \cdot 10^{-3}$ | 0,85 |
| 13 | 2,2'-Bithienyl | $NO^{\oplus}BF_4^{\ominus}$ | $C_6H_6$ | $N_2$ | quant. | $2,2 \cdot 10^{-3}$ | $2,7 \cdot 10^{-2}$ | 0,13 |
| 14 | 2,2'-Bithienyl | $NO^{\oplus}BF_4^{\ominus}$ | $C_6H_5-CH_3$ | $N_2$ | quant. | $1,7 \cdot 10^{-3}$ | $3,1 \cdot 10^{-2}$ | 0,15 |

Fortsetzung Tabelle 1

| Nr. | Ausgangsprodukt | umgesetzt mit | in | unter | Ausbeute | $\sigma'_{298\,K}$ / $mho \cdot cm^{-1}$ | $\sigma'_{o}$ / $mho \cdot cm^{-1}$ | $E_A$ / eV |
|---|---|---|---|---|---|---|---|---|
| 15 | 2,2'-Bithienyl | $NO^{\oplus}BF_4^{\ominus}$ | $CH_3-CN$ | Luft | 60 % | $5,6 \cdot 10^{-4}$ | $1,1 \cdot 10^{-1}$ | 0,27 |
| 16 | 2,2'-Bithienyl | $NO^{\oplus}BF_4^{\ominus}$ | $CH_3-CN^{d)}$ | Luft | 45 % | $1,5 \cdot 10^{-6}$ | $8,5 \cdot 10^{-4}$ | 0,33 |
| 17 | 2,2'-Bithienyl | $NO^{\oplus}BF_4^{\ominus}$ | $CH_2Cl-CH_2Cl$ | Ar | quant. | $6,9 \cdot 10^{-2}$ | $1,4 \cdot 10^{-1}$ | 0,04 |
| 18 | 2,2'-Bithienyl | $NO^{\oplus}SbF_6^{\ominus}$ | $CH_2Cl_2$ | Ar | quant. | $4,1 \cdot 10^{-2}$ | $2,1 \cdot 10$ | 0,20 |
| 19 | | aus 17 + $H_2O^{a)}$ | | | | $4,6 \cdot 10^{-4}$ | $1,6 \cdot 10^{+12}$ | 1,84 |
| 20 | 2,2'-Bithienyl | $NO^{\oplus}PF_6^{\ominus}$ | $CH_2Cl-CH_2Cl$ | $N_2$ | quant. | $7,1 \cdot 10^{-5}$ | $5,8 \cdot 10^{-4}$ | 0,11 |
| 21 | Pyrrol | $NO^{\oplus}BF_4^{\ominus}$ | $CH_3-CN$ | Luft | 55 % | $7,8 \cdot 10^{-10}$ | $5,8 \cdot 10^{-3}$ | 0,81 |
| 22 | Pyrrol | $NO^{\oplus}BF_4^{\ominus}$ | $CH_2Cl-CH_2Cl$ | Ar | quant. | $7,4 \cdot 10^{-3}$ | $6,3 \cdot 10^{-2}$ | 0,11 |
| 23 | Pyrrol | $NO^{\oplus}SbF_6^{\ominus}$ | $CH_2Cl_2$ | Ar | quant. | $1,1 \cdot 10^{-7}$ | $2,9 \cdot 10^{-4}$ | 0,41 |
| 24 | | aus 23 + $H_2O^{a)}$ | | | | $5,4 \cdot 10^{-11}$ | $1,8 \cdot 10^{+7}$ | 2,07 |
| 25 | Pyrrol | $NO^{\oplus}PF_6^{\ominus}$ | $CH_2Cl-CH_2Cl$ | $N_2$ | quant. | $4,0 \cdot 10^{-8}$ | $5,7 \cdot 10^{-5}$ | 0,37 |
| 26 | | aus 25 + $C_2H_5OH^{c)}$ | | | | $3,1 \cdot 10^{-9}$ | $2,2 \cdot 10^{+4}$ | 1,52 |
| 27 | Furan | $NO^{\oplus}BF_4^{\ominus}$ | $CH_2Cl-CH_2Cl$ | $N_2$ | quant. | $7,0 \cdot 10^{-6}$ | $1,9 \cdot 10^{+5}$ | 1,23 |
| 28 | Furan | $NO^{\oplus}SbF_6^{\ominus}$ | $CH_2Cl_2$ | Ar | quant. | $2,2 \cdot 10^{-6}$ | $3,4 \cdot 10^{-5}$ | 0,14 |

Fortsetzung Tabelle 1

| Nr. | Ausgangsprodukt | umgesetzt mit | in | unter | Ausbeute | $\sigma_{298\,K}$ $\overline{mho\cdot cm^{-1}}$ | $\sigma_o$ $\overline{mho\cdot cm^{-1}}$ | $\dfrac{E_A}{eV}$ |
|---|---|---|---|---|---|---|---|---|
| 29 | | aus 28 + $H_2O$ [a)] | | | | $1,1\cdot10^{-13}$ | $1,2\cdot10^{-5}$ | 0,95 |
| 30 | Furan | $NO^{\oplus}PF_6^{\ominus}$ | $CH_2Cl-CH_2Cl$ | $N_2$ | quant. | $3,0\cdot10^{-7}$ | $1,1\cdot10^{-6}$ | 0,07 |
| 31 | | aus 30 + $C_2H_5.OH$ [c)] | | | | $1,1\cdot10^{-14}$ | $1,8\cdot10^{-4}$ | 1,21 |
| 32 | Pyridin | $NO_2^{\oplus}SbF_6^{\ominus}$ | $CH_2Cl_2$ | Ar | 40 % | $7,4\cdot10^{-10}$ | $4,9\cdot10^{-7}$ | 0,33 |
| 33 | Tetrathiafulvalen | $NO^{\oplus}BF_4^{\ominus}$ | $CH_2Cl-CH_2Cl$ | $N_2$ | 45 % | $2,0\cdot10^{-8}$ | $4,9\cdot10^{-2}$ | 0,76 |
| 34 | 3,3'-Dithienylsulfid | $NO^{\oplus}BF_4^{\ominus}$ | $CH_2Cl-CH_2Cl$ | $N_2$ | 70 % | $6,6\cdot10^{-13}$ | $3,5\cdot10^{-5}$ | 0,91 |
| 35 | 1,2-Di-2-thienyl-ethylen | $NO^{\oplus}BF_4^{\ominus}$ | Hexan | $N_2$ | quant. | $1,7\cdot10^{-6}$ | $9,4\cdot10^{+1}$ | 0,92 |
| 36 | 1,2-Di-2-thienyl-ethylen | $NO^{\oplus}BF_4^{\ominus}$ | $CH_3-CN$ | $N_2$ | quant. | $3,0\cdot10^{-6}$ | $7,8\cdot10^{-3}$ | 0,40 |

Fortsetzung Tabelle 1

| Nr. | Ausgangsprodukt | umgesetzt | | | Ausbeute | $\sigma_{298\,K}$ $mho \cdot cm^{-1}$ | $\sigma_o$ $mho \cdot cm^{-1}$ | $\dfrac{E_A}{eV}$ |
|---|---|---|---|---|---|---|---|---|
| | | mit | in | unter | | | | |
| 37 | N-Methylpyrrol | $NO^{\oplus}PF_6^{\ominus}$ | $CH_3CN$ | $N_2$ | 66 % | $6,2 \cdot 10^{-8}$ | -- | -- |
| 38 | Furfurylalkohol | $NO^{\oplus}PF_6^{\ominus}$ | $CH_3CN$ | $N_2$ | 48 % | $3,4 \cdot 10^{-6}$ | -- | -- |
| 39 | 3-Methylthiophen | $NO^{\oplus}PF_6^{\ominus}$ | $CH_3CN$ | $N_2$ | 72 % | $4,3 \cdot 10^{-7}$ | -- | -- |
| 40 | 2-Methylthiazol | $NO^{\oplus}BF_4^{\ominus}$ | $CH_2Cl_2$ | $N_2$ | 68 % | $7,3 \cdot 10^{-6}$ | -- | -- |
| 41 | Poly(2,5-thio-phendiyl) | $NOSbF_6$ | $CH_2Cl_2$ | $N_2$ | 98 % | $9,1 \cdot 10^{-5}$ | -- | -- |

a)  1std. Rühren mit $H_2O$ bei Zimmertemperatur

b)  Hydrolyse mit 25%ig. $NH_4OH$, 1std. Rühren bei Zimmertemperatur

c)  3std. Rühren mit Ethanol bei Zimmertemperatur

d)  Reaktion in siedendem $CH_3-CN$

Patentansprüche:

1. Verfahren zur Herstellung dotierter, heteroaromatische 5-Ringe enthaltende Polymerer, dadurch gekennzeichnet,
   daß man Polymere, die mehrfach aromatische 5-Ring-
   Heterocyclen in der Polymerkette enthalten oder niedermolekulare 5-Ring-heterocyclische Verbindungen, gegebenenfalls in inerten organischen Lösungsmitteln bei
   Temperaturen von -20°C bis +80°C bzw. bis zum Siedepunkt
   des Lösungsmittels mit Nitronium- oder Nitrosoniumsalzen umsetzt.

2. Verfahren nach Anspruch 1, dadurch gekennzeichnet,
   daß man als Nitronium- oder Nitrosoniumsalze $NO^{\oplus}BF_4^{\ominus}$,
   $NO_2^{\oplus}BF_4^{\ominus}$, $NO^{\oplus}PF_6^{\ominus}$, $NO_2^{\oplus}PF_6^{\ominus}$, $NO^{\oplus}SbF_6^{\ominus}$ oder $NO^{\oplus}AsF_6^{\ominus}$
   $NO_2^{\oplus}AsF_6^{\ominus}$, $NO_2^{\oplus}SbF_6^{\ominus}$, $NO^{\oplus}ClO_4^{\ominus}$, $NO_2^{\oplus}ClO_4^{\ominus}$ einsetzt.

3. Dotierte, heteroaromatische 5-Ringe enthaltende
   Polymere, erhalten durch Umsetzung von polymeren oder
   niedermolekularen 5-Ring-Heteroaromaten mit Nitronium-
   oder Nitrosononiumsalzen.